**Europäisches Patentamt**

**European Patent Office**

**Office européen des brevets**

(19)

(11) Veröffentlichungsnummer: **0 196 500**
**B1**

# (12) EUROPÄISCHE PATENTSCHRIFT

(45) Veröffentlichungstag der Patentschrift:
02.11.88

(51) Int. Cl.⁴: **F 16 J 15/20,** F 16 J 15/18

(21) Anmeldenummer: 86103149.0

(22) Anmeldetag: 08.03.86

(54) Dichtbuchse mit einer Dichtpackung für hohe Drücke und Temperaturen.

(30) Priorität: 11.03.85 DE 3508592

(43) Veröffentlichungstag der Anmeldung:
08.10.86 Patentblatt 86/41

(45) Bekanntmachung des Hinweises auf die Patenterteilung:
02.11.88 Patentblatt 88/44

(84) Benannte Vertragsstaaten:
AT CH FR GB IT LI SE

(56) Entgegenhaltungen:
CH-A-448 649
DE-A-3 317 717
DE-B-1 190 750
US-A-3 226 126

(73) Patentinhaber: **Daume, Achim Dipl.- Ing., Engenser Weg 1, D-3006 Burgwedel 1 (DE)**

(72) Erfinder: **Daume, Achim Dipl.- Ing., Engenser Weg 1, D-3006 Burgwedel 1 (DE)**

(74) Vertreter: **Arendt, Helmut, Dipl.- Ing., Hubertusstrasse 2, D-3000 Hannover 1 (DE)**

**Beschreibung**

Die Erfindung betrifft eine Dichtbuchse mit einer Dichtpackung für hohe Drücke und Temperaturen zum Abdichten von bewegbar zwischen getrennten Druckräumen angeordneten Teilen.

Zum Trennen zweier Druckräume gegeneinander oder gegen die Atmosphäre werden Dichtungen verschiedenster Ausführungen verwendet. Es ist bekannt, hierfür zahlreiche unterschiedliche Materialien zu verwenden, z. B. Asbest, Gummi, Metall, Graphit, Packungsschnüre aus Hanf, Baumwolle, Kohle, Kunststoffe und dergleichen. Bei statischen Dichtungen ist die Reibung zwischen den abzudichtenden Teilen und den Dichtungen von untergeordneter Bedeutung. Dagegen ist die Reibung bei gegeneinander bewegten Teilen besonders zu beachten. Erhebliche Probleme entstehen vor allem bei hohen Drücken und Temperaturen. Hierfür hat sich besonders Graphit als geeignet erwiesen. Bekannt ist außerdem die Verwendung von Packungsschnüren für hohe Temperaturen. Bei der Verwendung von Graphit besteht jedoch der Nachteil, daß eine sehr hohe Reibung auftritt, wie beispielsweise der DE-A-3 317 717 entnehmbar ist. Der Vorteil besteht in der chemischen und thermischen großen Beständigkeit. Außerdem hat Graphit ein ausgezeichnetes Rückfederungsverhalten. Übliche Packungsschnüre, nicht aus Graphit, lassen ein gutes Rückfederungsverhalten vermissen. Nach dem Spannvorgang, beispielsweise durch Anziehen der Stopfbuchsbrille bei Stopfbuchsdichtungen, setzen sich die Schnüre mit der Zeit. Das erfordert ein erneutes Nachziehen der Stopfbuchsbrille. Um auch nach mehrmaligem Nachpressen einer Stopfbuchsbrille die Umkehrung des Druckes von der axialen in die radiale Richtung zu ermöglichen und damit die Dichtwirkung aufrechtzuerhalten, wurde nach der CH-A-448 649 eine Stopfbüchse vorgeschlagen, bei der zwischen dem Gehäuse der Stopfbüchse und der Packung ein elastisches, zylindrisches Zwischenglied eingeschoben ist, das die axiale Preßkraft mit der Stopfbuchsbrille in eine radiale Richtung umlenkt und dadurch für eine genügende Anpressung und Dichtwirkung sorgt. Dabei kann das elastische Zwischenglied aus einer oder mehreren Schichten eines elastischen Werkstoffs z. B. Gummi oder Kunststoff, bestehen. Es kann außerdem mit Teilen aus Metall oder anderen Werkstoffen verstärkt sein. Dadurch soll erreicht werden, daß sich eine radiale Anpressung der Packung auf der ganzen Länge ergibt. Das elastische Zwischenglied wird durch das Anziehen der Stopfbuchsbrille radial gegen die Dichtfläche ausgebeult und überträgt dabei eine Radialkraft auf die Dichtpackung. Sobald jedoch diese ihre Elastizität nach relativ kurzer Betriebszeit verliert, ist ein Nachziehen der Stopfbuchsbrille notwendig, um die radiale Ausbeulung des Zwischengliedes zu erhöhen. Ein häufiges Nachspannen der Stopfbuchse ist dadurch unumgänglich.

Der Erfindung liegt die Aufgabe zu Grunde, eine Dichtbuchse mit einer Dichtpackung nach dem Gattungsbegriff des Anspruchs 1 so zu gestalten, daß, ohne die Dichtpackung nachspannen zu müssen, über einen längeren Zeitraum als bei den bekannten Ausführungen, eine genügende Dichtwirkung von Dichtpackungen aus anderen Stoffen als Graphit aufrechterhalten werden kann. Die Erfindung als Lösung dieser Aufgabe zeichnet sich dadurch aus, daß die Dichtpackung aus zwei konzentrisch miteinander verpreßten Schichten gefertigt ist, deren äußere aus Graphit und deren innere aus an sich bekannten Dichtschnüren ohne Graphitanteil besteht.

Mit Hilfe eines einfachen Druckringes kann die Packung gespannt werden. Die innere Dichtfläche der Packung legt sich dadurch fest an das abzudichtende Teil an. Durch das gute Rückfederungsverhalten der äußeren, durch die Verpressung eng an der inneren Schicht anliegenden Graphitschicht bleibt die Dichtwirkung ohne einen weiteren Spannvorgang über lange Zeit erhalten.

Zum Halten der Dichtpackung und Ausbildung als komplette Einbaueinheit kann eine starre Hülse Verwendung finden, in welche unter Aufbringung einer Dichtkraft ein Druckring schiebbar ist. Die Dichtpackung kann dabei auf einer absatzartigen Durchmesserverengung der Hülse abgestützt sein. Durch einen Dichtring, der von außen über die absatzartige Durchmesserverengung der Hülse schiebbar ist, kann für eine äußere Abdichtung der Dichtpackung gegen die sie aufnehmenden Bauteile gesorgt werden.

Weitere den Erfindungsgegenstand vorteilhaft gestaltende Merkmale sind den Unteransprüchen zu entnehmen.

In der Zeichnung ist ein Ausführungsbeispiel der Erfindung schematisch dargestellt und nachstehend erläutert.

Es zeigen:

Fig. 1 einen Längsschnitt durch eine Dichtbuchse und
Fig. 2 das Einbaubeispiel einer Dichtbuchse.

Die erfindungsgemäße Dichtbuchse besteht aus einer Hülse 1 mit einer absatzartigen Durchmesserverengung 2, in welcher eine Dichtpackung aus zwei konzentrisch miteinander verpreßten Schichten 3 und 4 angeordnet sind. Die Schicht 3 besteht aus üblichen Packungsschnüren, beispielsweise Asbest während die Schicht 4 aus Graphit besteht. Die Gesamtpackung stützt sich auf der absatzartigen Durchmesserverengung 2 der Hülse ab. Ein Druckring 5 mit einem Anschlagbund 6 ist in die Hülse 1 drückbar, so daß bei einer Anspannung durch die Kraft F bei gleichzeitiger Gegenkraft $F_G$ der Innenmantel der Dichtpackung die durch die unterbrochene Strichführung 3' angedeutete

Form annimmt und sich gegen ein abzudichtendes Teil legt. Der Druckring 5 kann so weit in die Hülse 1 hineingepreßt werden, bis das Spiel 5 zwischen der oberen Hülsenkante und dem Anschlagbund 6 gegen Null geht. Um zu verhindern, daß über die äußere Mantelfläche der Hülse 1 ein Druckausgleich eintritt, ist ein Dichtring 7 vorgesehen, der auf die absatzartige Durchmesserverengung der Hülse 1 aufgeschoben ist.

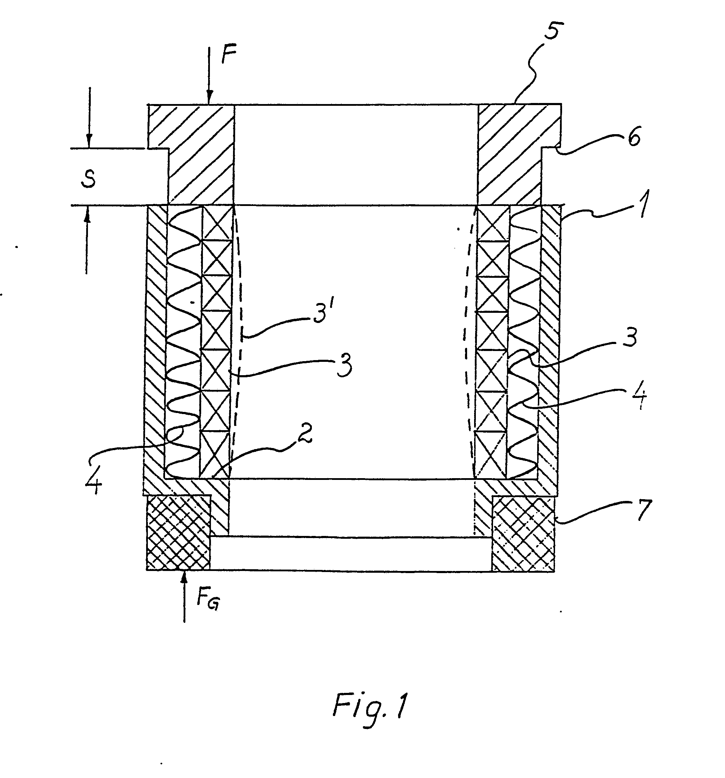

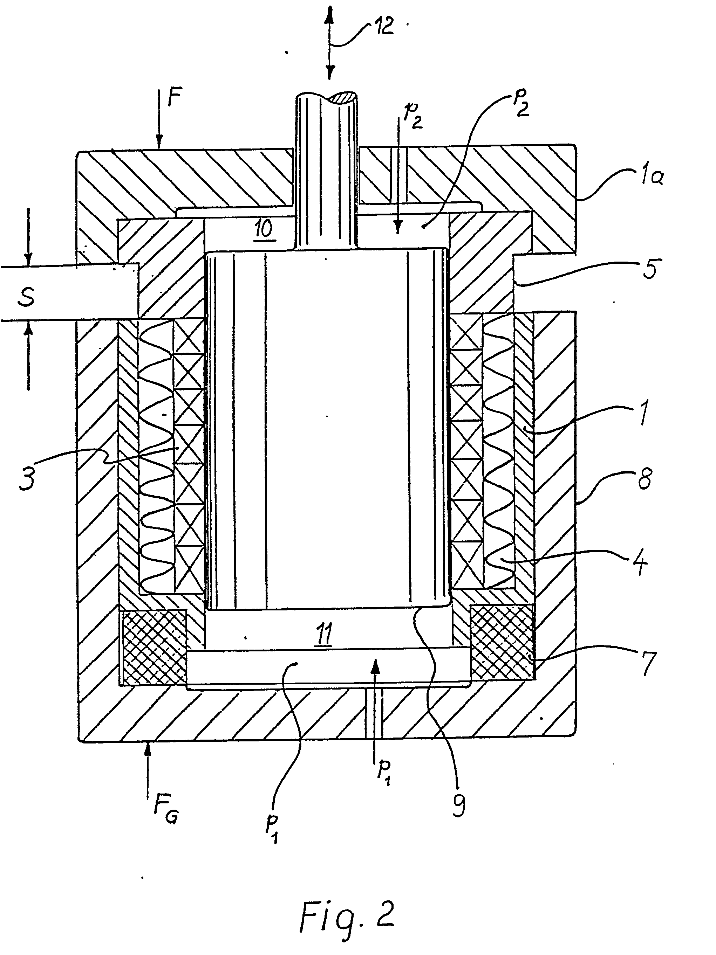

Wie der Figur 2 zu entnehmen ist, ist innerhalb eines Zylinders 8 ein Kolben 9 verschiebbar. Er trennt die Druckräume 10 und 11 voneinander, in welchen unterschiedliche Drücke P1 bzw. P2 herrschen und aufrechterhalten werden sollen. In den Zylinder 8 ist die Dichtbuchse gemäß Figur 1 eingeschoben und sorgt für die Trennung der Dichträume 10 und 11 gegeneinander. Um zu verhindern, daß ein Druckausgleich des Druckraumes 11 gegen den den Zylinder 8 umgebenden Außendruck erfolgt, ist der Dichtring 7 zwischen der Hülse 1 und dem Boden des Zylinders 9 eingespannt. In entsprechender Weise kann am oberen Ende zwischen dem Zylinderdeckel 1a und dem Druckring 5 verfahren, d. h. zusätzlich ein Druckring vorgesehen werden.

Bei dynamischer Belastung, d. h. beim Bewegen des Kolbens 9 in einer Richtung des Doppelpfeiles 12 würde sich bei ausschließlicher Verwendung einer Dichtpackung aus Graphit eine hohe Reibung ergeben. Durch das Verhalten der erfindungsgemäßen Dichtpackung - in Figur 1 deutlich erkennbar dargestellt - wird eine genügende Dichtwirkung zwischen der inneren Packungsschicht 3 und dem Kolben hergestellt. Durch das gute Rückfederungsverhalten der äußeren Packungsschicht 4 aus Graphit wird der Anpreßdruck der Packungsschnüre 3 über lange Zeit aufrechterhalten, ohne daß die Stellung des Druckringes 5 durch Nachspannen des Zylinderdeckels 1 verändert werden muß. Die Größe des Druckraumes 10 kann dadurch über den entsprechenden Zeitraum konstant gehalten werden. Der gleiche Vorteil macht sich bei einem Verschleiß der inneren Dichtpackung 3 bemerkbar, deren Abnutzung durch entsprechendes Rückfederungsverhalten der äußeren Dichtpackungsschicht 4 über lange Zeit ausgeglichen werden kann.

**Patentansprüche**

1. Dichtbuchse mit einer Dichtpackung für hohe Drücke und Temperaturen zum Abdichten von bewegbar zwischen getrennten Druckräumen angeordneten Teilen, dadurch gekennzeichnet, daß die Dichtpackung aus zwei konzentrisch miteinander verpreßten Schichten (3, 4) gefertigt ist, deren äußere (4) aus Graphit und deren innere (3) aus an sich bekannten Dichtschnüren ohne Graphitanteil besteht.

2. Dichtbuchse nach Anspruch 1, dadurch gekennzeichnet, daß die Dichtpackung (3, 4) zur Ausbildung als komplette Einbaueinheit innerhalb einer starren Hülse (1) angeordnet und auf einer absatzartigen Durchmesserverengung (2) der Hülse (1) abgestützt ist, in welche unter Aufbringung einer Dichtkraft (F) ein Druckring (5) schiebbar ist

3. Dichtbuchse nach den Ansprüchen 1 oder 2, dadurch gekennzeichnet, daß auf die absatzartige Durchmesserverengung (2) der Hülse (1) ein äußerer Dichtring (7) aufgeschoben ist.

4. Dichtbuchse nach einem der Ansprüche 1 oder 2, dadurch gekennzeichnet, daß der Druckring (5) mit einem Anschlagbund (6) für die Stirnseite der Hülse (1) versehen ist.

**Claims**

1. Stuffing box with sealing packing for high pressures and temperatures, for the sealing of parts arranged movably between separated pressure chambers, characterised in that the sealing packing is prepared from two layers (3, 4) which are pressed together concentrically, of which the outer layer (4) comprises graphite and the inner layer (3) comprises known sealing cords which do not contain graphite.

2. Stuffing box according to claim 1, characterised in that the sealing packing (3, 4) is arranged so that it forms a complete built-in unit inside a rigid casing (1) and is supported on a shelf-like narrowing (2) of the diameter of the casing (1), into which casing a pressure ring (5) can be pushed when a sealing force (F) is applied.

3. Stuffing box according to claims 1 or 2, characterised in that an outer sealing ring (7) is slid on to the shelf-like narrowing (2) of the diameter of the casing (1).

4. Stuffing box according to one of claims 1 or 2, characterised in that the pressure ring (5) is provided with a stop collar (6) for the front end of the casing (1).

**Revendications**

1. Presse-étoupe avec une garniture pour pressions et températures élevées pour l'étanchéification de pièces mobiles disposées entre des chambres sous pression séparées, caractérisé en ce que la garniture est réalisée en deux couches (3, 4) concentriques compressées ensemble, dont la couche externe (4) consiste en graphite et dont la couche interne (3) consiste en fils de garniture connus en soi sans graphite.

2. Presse-étoupe selon la revendication 1, caractérisé en ce que la garniture (3, 4) est disposée à l'intérieur d'une gaine rigide (1) pour constituer une unité constructive complète et en ce qu'elle s'appuie sur un rétrécissement en forme de gradin (2) du diamètre de la gaine (1) dans laquelle une bague de serrage (5) peut être insérée par application d'une force d'étanchéité (F).

3. Presse-étoupe selon la revendication 1 ou 2, caractérisé en ce qu'une bague d'étanchéité externe (7) est glissée sur le rétrécissement en forme de gradin (2) du diamètre de la gaine (1).

4. Presse-étoupe selon l'une des revendications 1 ou 2, caractérisé en ce que la bague de serrage (5) est pourvue d'un collet de butée (6) pour le côté frontal de la gaine (1)

Fig. 1

Fig. 2